# EUROPÄISCHE PATENTSCHRIFT

(11) **EP 4 423 463 B1**
(45) Veröffentlichungstag und Bekanntmachung des Hinweises auf die Patenterteilung: **17.06.2026**
(21) Anmeldenummer: 22782518.9
(22) Anmeldetag: 22.09.2022
(51) Int. Cl.: G01F 1/66, G01F 1/667

(54) **ULTRASCHALLSENSOR FÜR EIN ULTRASCHALL-MESSGERÄT UND ULTRASCHALL-MESSGERÄT**
ULTRASONIC SENSOR FOR AN ULTRASONIC MEASURING DEVICE, AND ULTRASONIC MEASURING DEVICE
CAPTEUR À ULTRASON POUR DISPOSITIF DE MESURE À ULTRASON, ET DISPOSITIF DE MESURE À ULTRASON

(30) Priorität: 29.10.2021 DE 102021128380
(43) Veröffentlichungstag der Anmeldung: 04.09.2024
(60) Teilanmeldung: 26158738.0
(73) Patentinhaber: Endress+Hauser Flowtec AG, 4153 Reinach (CH)
(72) Erfinder: UEBERSCHLAG, Pierre, 68300 Saint-Louis (FR)
(74) Vertreter: Endress + Hauser Group Services (Deutschland) AG+Co. KG
(86) Internationale Anmeldenummer: PCT/EP2022/076332
(87) Internationale Veröffentlichungsnummer: WO 2023/072486

(56) Entgegenhaltungen:
- EP-A1- 3 335 806
- WO-A1-98/06143
- US-A1- 2020 209 031

## Beschreibung

Die Erfindung betrifft einen Ultraschallsensor für ein Ultraschall-Messgerät und ein solches Ultraschall-Messgerät zum Messen mindestens einer Messgröße. Ultraschallsensoren sind in verschiedenen Ausführungen bekannt. Beispielsweise werden Sensoren über Koppelkörper mit einer Wandung eines Behältnisses akustisch und mechanisch gekoppelt, um Ultraschallsignale in das Behältnis einzustrahlen, siehe beispielsweise die DE102017130976A1. Es ist dabei zu berücksichtigen, dass Ultraschallsignale in ihrer Frequenz beispielsweise an eine Wandstärke der Wandung angepasst sein müssen. Ein weiterer Ultraschallsensor des Standes der Technik ist WO98/06143A1 zu entnehmen.

Üblicherweise werden für verschiedene Wandungen von Behältnissen verschiedene Sensoren vorgehalten.

Aufgabe der Erfindung ist es, einen Ultraschallsensor vorzuschlagen, welcher flexibel und robust einsetzbar ist.

Die Aufgabe wird gelöst durch einen Ultraschallsensor gemäß dem unabhängigen Anspruch 1 sowie durch ein Ultraschall-Messgerät gemäß dem Anspruch 5.

Ein erfindungsgemäßer Ultraschallsensor für ein Ultraschall-Messgerät zum Messen mindestens einer Messgröße umfasst:
Eine Wandleranordnung zum Erzeugen und Erfassen von Ultraschallsignalen mit mindestens einem Piezoelement, wobei das mindestens eine Piezoelement mittels Elektroden dazu eingerichtet ist zwischen elektrischen Signalen und Ultraschallsignalen sowie umgekehrt zu wandeln;
einen Koppelkörper zum Übertragen der Ultraschallsignale zwischen einer ersten Seitenfläche und einer zweiten Seitenfläche des Koppelkörpers, wobei auf der ersten Seitenfläche mindestens ein Piezoelement angeordnet ist,
wobei die Wandleranordnung einen Anordnungsamplitudengang aufweist,
wobei der Anordnungsamplitudengang aus zumindest zwei teilweise überlappenden Teilamplitudengängen zusammengesetzt ist, welche Teilamplitudengänge jeweils eine Bandbreite bemessen durch eine Halbwertsbreite sowie eine Zentralfrequenz aufweisen,
wobei unterschiedliche, hinsichtlich ihrer Frequenzbereiche benachbarte Teilamplitudengänge bezüglich ihrer Zentralfrequenzen einen Maximalabstand von einem Mittelwert ihrer Bandbreiten multipliziert mit einem Faktor F aufweisen,
wobei F höchstens 2, und wobei F insbesondere höchstens 1.5, und wobei F bevorzugt höchstens 1,
und wobei F mindestens 0.2, und wobei F insbesondere mindestens 0.4, und wobei F bevorzugt mindestens 0.5.

Ein Amplitudengang beschreibt dabei einen frequenzabhängigen Zusammenhang zwischen Amplituden eines elektrischen Signals und Amplituden eines Ultraschallsignals und gibt somit einen Hinweis auf einen Einsatzbereich einer Wandleranordnung an. Große Werte eines Amplitudengangs entsprechen dabei einer guten Wandlungseffizienz zwischen elektrischen Signalen und Ultraschallsignalen.

Durch die Überlappung mehrerer Teilamplitudengänge bei einem Anordnungsamplitudengang kann ein nutzbarer Frequenzbereich eines Ultraschallsensors erweitert werden. Auf diese Weise kann der Ultraschallsensor flexibel und robust bei verschiedenen Behältnissen angewandt werden. Ein Anwender kann somit für viele Anwendungen ein Ultraschallsignal passend zu einer Wandung eines Behältnisses wie beispielsweise ein Messrohr wählen, ohne an eine Einsatzgrenze des Ultraschallsensors zu geraten und diesen wechseln zu müssen. Der Sensor wird dazu über seine zweite Seitenfläche mit dem Behältnis akustisch und mechanisch gekoppelt.

Mittels der Elektroden kann bei Anlegen einer elektrischen, zeitlich variierenden Spannung der Piezoeffekt ausgenutzt werden, um das zugehörige Piezoelement zum Schwingen anzuregen. Auf diese Weise können Ultraschallsignale erzeugt werden. Umgekehrt führen von außen aufgeprägte Schwingungen dazu, dass das Piezoelement interne elektrische Spannungen erzeugt, welche durch die Elektroden als Messsignal abgegriffen werden können. Auf diese Weise können Ultraschallsignale erfasst werden.

Erfindungsgemäß weist die Wandleranordnung mindestens zwei Piezoelemente auf, wobei zumindest zwei Piezoelemente der mindestens zwei Piezoelemente jeweils einen unterschiedlichen Piezoamplitudengang aufweisen. Auf diese Weise kann die Planung und Herstellung der Wandleranordnung vereinfacht werden.

Erfindungsgemäß sind Piezoelemente mit unterschiedlichem Piezoamplitudengang koaxial zueinander angeordnet.

Auf diese Weise ist sind Signalpfadverläufe von Ultraschallsignalen erzeugt durch Piezoelemente mit unterschiedlichem Amplitudengang gleich.

Erfindungsgemäß ist ein erstes Piezoelement scheibenförmig, wobei mindestens ein zweites Piezoelement ringförmig ausgebildet ist, wobei das mindestens eine zweite Piezoelement einen Ringbereich und einen freien Zentralbereich aufweist,
wobei das erste Piezoelement im Zentralbereich des mindestens einen zweiten Piezoelements angeordnet ist,
oder wobei das zweite Piezoelement auf dem ersten Piezoelement gelagert ist, wobei das erste Piezoelement auf der ersten Seitenfläche des Koppelkörpers angeordnet ist.

Auf diese Weise kann eine koaxiale Anordnung verschiedener Piezoelemente erreicht werden.

In einer Ausgestaltung weisen Piezoelemente mit unterschiedlichem Piezoamplitudengang unterschiedliche Dicken auf.

Eine Resonanzfrequenz von einem Piezoelement ist wesentlich durch seine geometrischen Abmessungen und insbesondere durch seine Dicke bestimmt.

In einer Ausgestaltung weist ein Piezoelement einen Piezoamplitudengang auf,
welcher Piezoamplitudengang aus zumindest zwei überlappenden Teilamplitudengängen zusammengesetzt ist, welche Teilamplitudengänge jeweils eine Bandbreite bemessen durch eine Halbwertsbreite sowie eine Zentralfrequenz aufweisen,
wobei unterschiedliche benachbarte Teilamplitudengänge bezüglich ihrer Zentralfrequenzen einen Maximalabstand von einem Mittelwert ihrer Bandbreiten multipliziert mit einem Faktor F aufweisen,
wobei F höchstens 2, und wobei F insbesondere höchstens 1,
wobei das Piezoelement scheibenförmig ist und abschnittsweise eine erste Dicke aufweist, und wobei das Piezoelement abschnittsweise eine zweite Dicke aufweist,
wobei eine Seitenfläche des Piezoelements eben ist und mit der ersten Seitenfläche des Koppelkörpers akustisch gekoppelt ist.

Auf diese Weise kann eine Justierung mehrerer Piezoelemente zueinander vermieden werden.

In einer Ausgestaltung weist das Piezoelement in einem Zentralbereich eine Vertiefung auf.

Ein erfindungsgemäßes Ultraschall-Messgerät zum Messen mindestens einer Messgröße umfasst:
Zumindest einen erfindungsgemäßen Ultraschallsensor,
eine elektronische Mess-/Betriebsschaltung zum Betreiben des mindestens einen Ultraschallsensors sowie zum Bereitstellen von Messwerten der mindestens einen Messgröße.

Im Folgenden wird die Erfindung anhand von Ausführungsbeispielen beschrieben.
Figs. 1 a) und b) zeigen einen beispielhaften erfindungsgemäßen Ultraschallsensor aus verschiedenen Ansichten;
Figs. 2 a) bis c) zeigen beispielhafte erfindungsgemäße Wandleranordnungen;
Fig. 3 zeigt beispielhafte Teilamplitudengänge;
Fig. 4 zeigt beispielhafte Ultraschall-Messgeräte.

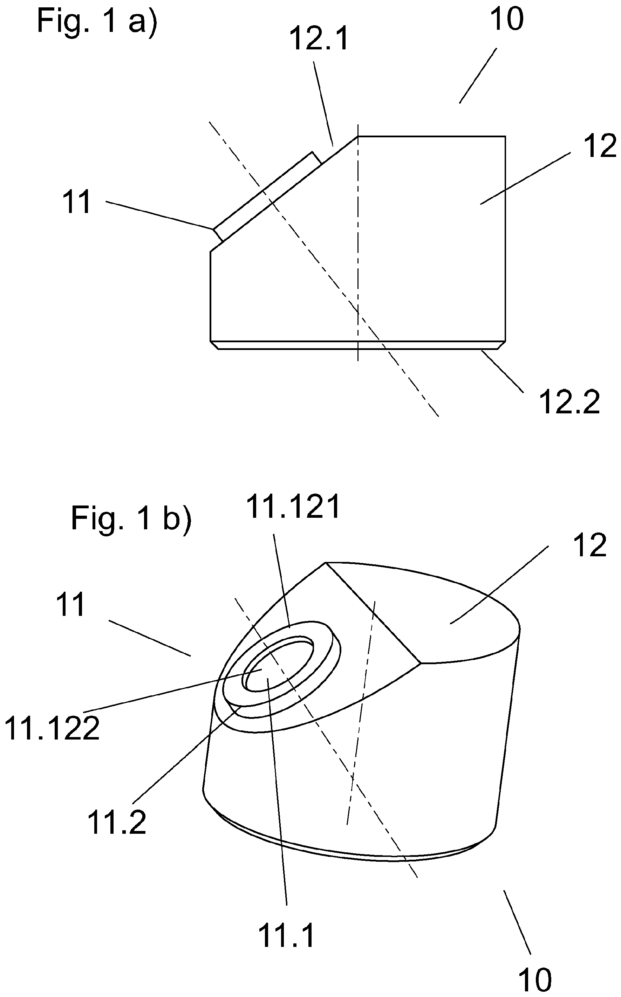

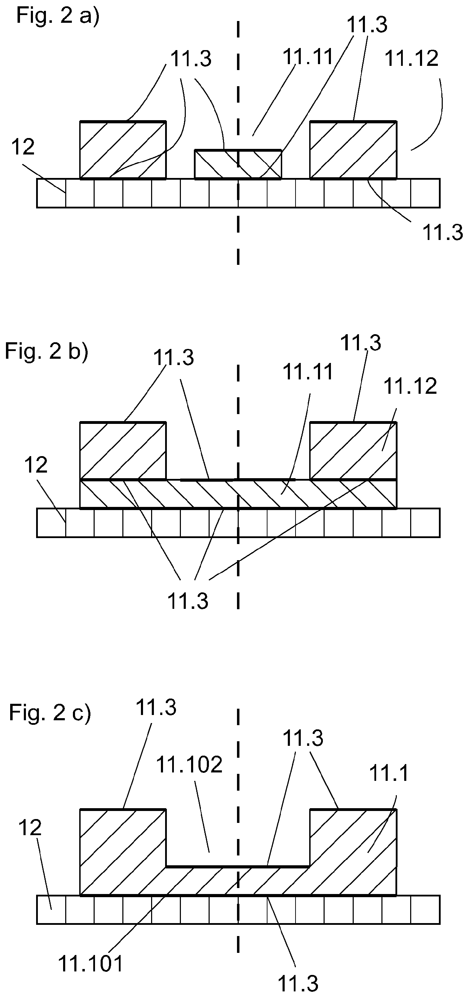

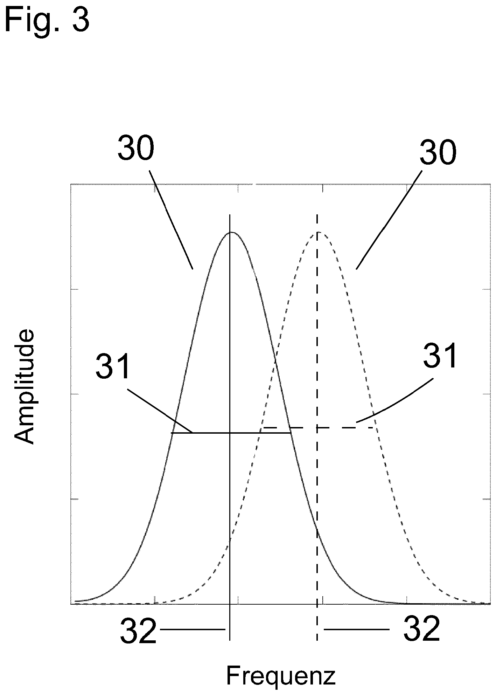

Fig. 1 a) zeigt eine Seitenansicht auf einen beispielhaften erfindungsgemäßen Ultraschallsensor 10 mit einer Wandleranordnung 11, welche auf einer ersten Seitenfläche 12.1 eines Koppelkörpers 12 angeordnet und mit diesem akustisch gekoppelt ist. Erfindungsgemäß weist die Wandleranordnung 11 einen Anordnungsamplitudengang auf, welcher aus zumindest zwei überlappenden Teilamplitudengängen zusammengesetzt ist, siehe dazu Figs. 2 a) bis c) und Fig. 3 b). Ein Anordnungsamplitudengang beschreibt dabei einen frequenzabhängigen Zusammenhang zwischen Amplituden eines elektrischen Signals und Amplituden eines Ultraschallsignals und gibt somit einen Hinweis auf einen Einsatzbereich einer Wandleranordnung an. Große Werte des Anordnungsamplitudengangs entsprechen dabei einer guten Wandlungseffizienz zwischen elektrischen Signalen und Ultraschallsignalen.

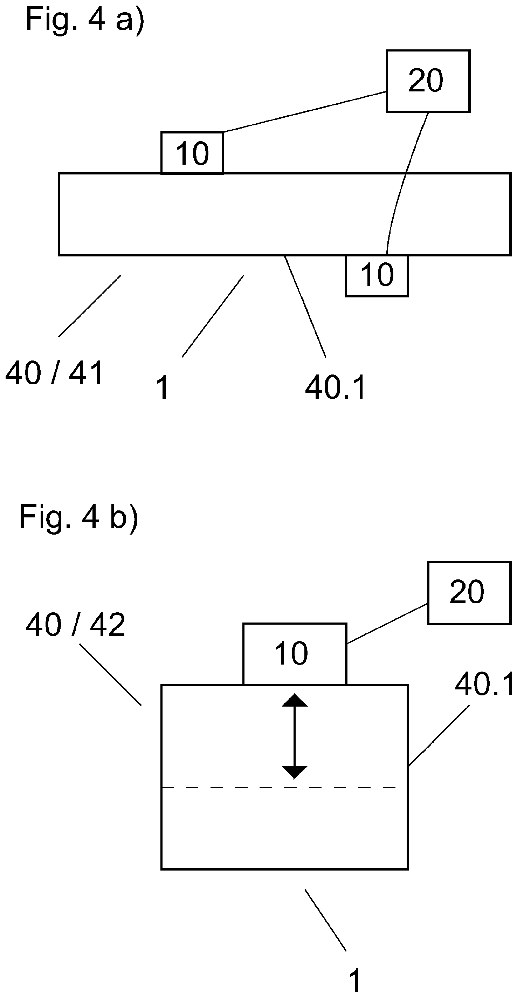

Der Koppelkörper weist eine zweite Seitenfläche 12.2 auf, welche dazu eingerichtet ist, mit einer Wandung 40.1 eines Behältnisses 40, siehe Figs. 4 a) und 4 b), akustisch gekoppelt zu werden. Das Behältnis kann beispielsweise ein Messrohr oder ein Tank beispielsweise für ein Fluid wie beispielsweise eine Flüssigkeit sein.

Fig. 1 b) zeigt eine Schrägansicht auf den in Fig. 1 a) gezeigten Ultraschallsensor, wobei die Wandleranordnung 11 beispielhaft ein scheibenförmiges erstes Piezoelement 11.1 und ein ringförmiges zweites Piezoelement 11.2 mit einem Ringbereich 11.121 aufweist, wobei das erste Piezoelement koaxial in einem Zentralbereich 11.122 des zweiten Piezoelements angeordnet ist, wobei die beiden Piezoelemente unterschiedliche Anordnungsamplitudengänge aufweisen.

Figs. 2 a), b) und c) skizzieren beispielhafte erfindungsgemäße Wandleranordnungen 11, mittels welchen ein erfindungsgemäßer Anordnungsamplitudengang eingerichtet werden kann. Die hier gezeigten Beispiele sind nicht beschränkend auszulegen.

Fig. 2 a) zeigt einen Querschnitt durch eine Wandleranordnung wie in Fig. 1 b) gezeigt, wobei ein scheibenförmiges erstes Piezoelement 11.11 in einem Zentralbereich eines ringförmigen zweiten Piezoelements 11.12 angeordnet ist. Eine Resonanzfrequenz von einem Piezoelement ist wesentlich durch seine geometrischen Abmessungen und insbesondere durch seine Dicke bestimmt. Je dicker ein Piezoelement ist, desto tiefer ist seine Resonanzfrequenz. Wie hier gezeigt kann beispielsweise das zweite Piezoelement 11.12 eine größere Dicke aufweisen als das zentrale erste Piezoelement, so dass das zweite Piezoelement eine tiefere Resonanzfrequenz aufweist.

Beispielsweise dadurch kann erreicht werden, dass ein Anordnungsamplitudengang der Wandleranordnung 11 aus verschiedenen, sich überlappenden Amplitudengängen zusammengesetzt ist, welche Amplitudengänge jeweils zu einem Piezoelement gehören. Beide Piezoelemente sind mit dem Koppelkörper 12 akustisch und mechanisch gekoppelt. Mittels Elektroden 11.3 können einerseits die Piezoelemente zu Schwingungen angeregt werden sowie von außen aufgeprägte Schwingungen erfasst werden.

Beispielsweise kann der Anordnungsamplitudengang durch weitere ringförmige Piezoelemente erweitert werden, welche konzentrisch um das hier gezeigte zweite Piezoelement 11.12 herum angeordnet werden. Beispielsweise kann das hier gezeigte scheibenförmige erste Piezoelement alternativ auch ringförmig sein.

Da eine Ultraschallabstrahlcharakteristik durch ein Verhältnis Wellenlänge eines Ultraschallsignals zu Durchmesser eines entsprechenden Piezoelements gekennzeichnet ist, können als Nebeneffekt Abstrahlcharakteristiken verschiedener Piezoelemente einer Wandleranordnung aufeinander abgestimmt werden.

Fig. 2 b) zeigt eine alternative erfindungsgemäße Wandleranordnung, wobei das ringförmige zweite Piezoelement 11.12 auf dem scheibenförmigen ersten Piezoelement 11.11 gelagert ist. Hier steht das erste Piezoelement 11.11 in Kontakt mit dem Koppelkörper 12. Wie in Fig. 2 a) weisen beide Piezoelemente unterschiedliche Dicken auf, damit ein Anordnungsamplitudengang der Wandleranordnung aus verschiedenen, sich überlappenden Teilamplitudengängen zusammengesetzt ist. Auch weisen die Piezoelemente Elektroden 11.3 auf, um Schwingungen zu erzeugen und zu erfassen.

Fig. 2 c) zeigt eine weitere erfindungsgemäße Ausgestaltung, bei welcher ein erstes Piezoelement 11.1 scheibenförmig ausgestaltet ist und in einem Zentralbereich eine Verjüngung aufweist. Durch die beispielhafte hier gezeigte Anordnung der Elektroden 11.3 in Kombination mit der geometrischen Ausgestaltung weist das erste Piezoelement einen Piezoamplitudengang aus verschiedenen, sich überlappenden Teilamplitudengängen auf, welche jeweils zu unterschiedlichen Elektrodenpaaren gehören.

Fig. 3 skizziert beispielhafte, schematische Teilamplitudengänge 30 beispielsweise von zwei Piezoelementen, wobei die vertikale Achse eine frequenzabhängige Amplitude und die horizontale Achse beispielsweise eine Anregungsfrequenz wiedergibt. Das durchgezogene Frequenzspektrum ist etwas tieffrequenter als das gestrichelte Frequenzspektrum. Beide Teilamplitudengänge weisen jeweils eine Halbwertsbreite 31 und jeweils eine Zentralfrequenz 32 auf und überlappen sich. Die Teilamplitudengänge können sich wie hier dargestellt ähneln oder auch unterschiedlich sein. In der Praxis sind solche Teilamplitudengänge deutlich weniger glatt, Fig. 3 weist ausschließlich erläuternden Charakter auf.

Erfindungsgemäß weisen unterschiedliche, hinsichtlich ihrer Frequenzbereiche benachbarte Teilamplitudengänge bezüglich ihrer Zentralfrequenzen einen Maximalabstand von einem Mittelwert ihrer Bandbreiten multipliziert mit einem Faktor F auf, wobei F höchstens 2, und wobei F insbesondere höchstens 1.5, und wobei F bevorzugt höchstens 1, und wobei F mindestens 0.2, und wobei F insbesondere mindestens 0.4, und wobei F bevorzugt mindestens 0.5.

Durch eine Obergrenze von F wird ein Maximalabstand definiert, durch eine Untergrenze von F ein Mindestabstand. So wird ein lückenloser Anordnungsamplitudengang durch wenige verschiedene Piezoelemente konstruiert.

Der durchgezogene Teilamplitudengang gehört hierbei zu einem Piezoelement mit einer größeren Dicke (Figs. 2 a), b) bzw. zu einem Elektrodenpaar mit größerem Abstand (Fig. 2 c)), der gestrichelte Teilamplitudengang entsprechend zu einem Piezoelement mit einer geringeren Dicke (Figs. 2 a), b) bzw. zu einem Elektrodenpaar mit geringerem Abstand (Fig. 2 c)).

Bei den in Figs. 2 a) bis c) dargestellten Wandleranordnungen ist ein zugehöriger Anordnungsamplitudengang erweitert, so dass in einem größeren Frequenzbereich als bei üblichen Wandleranordnungen Ultraschallsignale effizient erzeugt und erfasst werden können. Je nach Verschaltung der Piezoelemente zu einer Wandleranordnung setzt sich ein Anordnungsamplitudengang einer erfindungsgemäßen Wandleranordnung somit beispielsweise im Wesentlichen aus Teilamplitudengängen von einzelnen Piezoelementen zusammen bzw. entspricht deren Summe.

Beispielsweise kann ein einzelnes Piezoelement einen Piezoamplitudengang aufweisen, welcher Piezoamplitudengang aus zumindest zwei überlappenden Teilamplitudengängen 30 zusammengesetzt ist, welche Teilamplitudengänge jeweils eine Bandbreite 31 bemessen durch eine Halbwertsbreite sowie eine Zentralfrequenz 32 aufweisen. Dies kann beispielsweise mittels eines Piezoelements entsprechend Fig. 2 c) umgesetzt werden.

Erfindungsgemäß weisen unterschiedliche, hinsichtlich ihrer Frequenzbereiche benachbarte Teilamplitudengänge bezüglich ihrer Zentralfrequenzen 32 einen Maximalabstand von einem Mittelwert ihrer Bandbreiten multipliziert mit einem Faktor F auf, wobei F höchstens 2, und wobei F insbesondere höchstens 1. Auf diese Weise ist sichergestellt, dass eine Wandleranordnung in einem zusammenhängenden Frequenzbereich und nicht in mehreren voneinander getrennten Frequenzbereich wirkt.

Figs. 4 a) und b) skizzieren beispielhafte Ultraschall-Messgeräte 1 mit mindestens einem erfindungsgemäßen Ultraschallsensor 10 und einer elektronischen Mess-/Betriebsschaltung 20 zum Betreiben des mindestens einen Ultraschallsensors sowie zum Bereitstellen von Messwerten mindestens einer Messgröße. Der mindestens eine Ultraschallsensor 10 ist an einer Außenseite einer Wandung 40.1 eines Behältnisses 40 angebracht und ist dazu eingerichtet, Ultraschallsignale in das Behältnis einzustrahlen und aus dem Behältnis austretende Ultraschallsignale zu empfangen.

Fig. 4 a) skizziert ein beispielhaftes Ultraschall-Durchflussmessgerät 1.1 nach dem Laufzeit-Differenzen-Messprinzip, wobei eine Laufzeitdifferenz von Ultraschallsignalen zwischen zwei erfindungsgemäßen Ultraschallsensoren 10 in und gegen Strömungsrichtung eines durch ein Messrohr 41 strömenden Mediums dazu herangezogen wird, eine Strömungsgeschwindigkeit zu bestimmen.

Fig. 4 b) skizziert ein Ultraschall-Füllstandmessgerät 1.2, bei welchem ein Füllstand eines Mediums in einem Tank 42 über eine Ultraschallsignallaufzeit von einem vom Ultraschallsensor 10 ausgestrahlten, an einer Grenzfläche des Mediums teilreflektierten und wieder empfangenen Ultraschallsignals gemessen wird.

Damit Ultraschallsignale eine Wandung eines Behältnisses gut durchdringen können, muss ein Ultraschallsignalspektrum an die Wandung angepasst sein.

Erfindungsgemäße Wandleranordnungen sind in der Lage mit Ultraschallsignale in einem weiten Frequenzbereich zu erzeugen und zu erfassen, so dass ein Anwender bei Wechsel eines Behältnisses 40 keinen Wechsel der Ultraschallsensoren durchführen muss. Auf diese Weise kann ein erfindungsgemäßes Ultraschallmessgerät vielfältig eingesetzt und somit Kosten gespart werden.

## Patentansprüche

1. Ultraschallsensor (10) für ein Ultraschall-Messgerät (1) umfassend:
Eine Wandleranordnung (11) zum Erzeugen und Erfassen von Ultraschallsignalen mit mindestens einem Piezoelement (11.1), wobei das mindestens eine Piezoelement mittels Elektroden (11.3) dazu eingerichtet ist zwischen elektrischen Signalen und Ultraschallsignalen sowie umgekehrt zu wandeln,
einen Koppelkörper (12) zum Übertragen der Ultraschallsignale zwischen einer ersten Seitenfläche (12.1) und einer zweiten Seitenfläche (12.2) des Koppelkörpers, wobei auf der ersten Seitenfläche mindestens ein Piezoelement angeordnet ist,
wobei die Wandleranordnung einen Anordnungsamplitudengang aufweist,
wobei der Anordnungsamplitudengang aus zumindest zwei teilweise überlappenden Teilamplitudengängen (30) zusammengesetzt ist, welche Teilamplitudengänge jeweils eine Bandbreite (31) bemessen durch eine Halbwertsbreite sowie eine Zentralfrequenz (32) aufweisen,
wobei unterschiedliche, hinsichtlich ihrer Frequenzbereiche benachbarte Teilamplitudengänge bezüglich ihrer Zentralfrequenzen (32) einen Maximalabstand von einem Mittelwert ihrer Bandbreiten multipliziert mit einem Faktor F aufweisen,
wobei F höchstens 2, und wobei F insbesondere höchstens 1.5, und wobei F bevorzugt höchstens 1,
und wobei F mindestens 0.2, und wobei F insbesondere mindestens 0.4, und wobei F bevorzugt mindestens 0.5,
wobei die Wandleranordnung (11) mindestens zwei Piezoelemente (11.1) aufweist, wobei zumindest zwei Piezoelemente der mindestens zwei Piezoelemente jeweils einen unterschiedlichen Piezoamplitudengang aufweisen,
**dadurch gekennzeichnet, dass**
Piezoelemente (11.1) mit unterschiedlichem Piezoamplitudengang koaxial zueinander angeordnet sind,
wobei ein erstes Piezoelement (11.11) der Piezoelemente mit unterschiedlichem Amplitudengang scheibenförmig oder ringförmig ist, und wobei mindestens ein zweites Piezoelement (11.12) der Piezoelemente mit unterschiedlichem Amplitudengang ringförmig ausgebildet ist, wobei das mindestens eine zweite Piezoelement einen Ringbereich (11.121) und einen freien Zentralbereich (11.122) aufweist,
wobei das erste Piezoelement im Zentralbereich des mindestens einen zweiten Piezoelements angeordnet ist,
oder wobei das zweite Piezoelement auf dem ersten Piezoelement gelagert ist, wobei das erste Piezoelement auf der ersten Seitenfläche des Koppelkörpers angeordnet ist.

2. Ultraschallsensor nach Anspruch 1,
wobei Piezoelemente (11.1) mit unterschiedlichem Piezoamplitudengang unterschiedliche Dicken aufweisen.

3. Ultraschallsensor nach Anspruch 1 oder 2,
wobei mindestens ein Piezoelement (11.1) einen Piezoamplitudengang aufweist, welcher Piezoamplitudengang aus zumindest zwei teilweise überlappenden Teilamplitudengängen (30) zusammengesetzt ist, welche Teilamplitudengänge jeweils eine Bandbreite (31) bemessen durch eine Halbwertsbreite sowie eine Zentralfrequenz (32) aufweisen,
wobei unterschiedliche benachbarte Frequenzbereiche bezüglich ihrer Zentralfrequenzen (32) einen Maximalabstand von einem Mittelwert ihrer Bandbreiten multipliziert mit einem Faktor F aufweisen,
wobei F höchstens 2, und wobei F insbesondere höchstens 1,
wobei das Piezoelement scheibenförmig ist und abschnittsweise eine erste Dicke aufweist, und wobei das Piezoelement abschnittsweise eine zweite Dicke aufweist, wobei eine Seitenfläche (11.101) des Piezoelements eben ist und mit der ersten Seitenfläche des Koppelkörpers akustisch gekoppelt ist.

4. Ultraschallsensor nach Anspruch 3,
wobei das Piezoelement (11.1) in einem Zentralbereich (11.102) eine Vertiefung aufweist.

5. Ultraschall-Messgerät (1) zum Messen mindestens einer Messgröße umfassend:
Zumindest einen Ultraschallsensor (10) nach einem der vorigen Ansprüche,
eine elektronische Mess-/Betriebsschaltung (20) zum Betreiben des mindestens einen Ultraschallsensors sowie zum Bereitstellen von Messwerten der mindestens einen Messgröße.

## Claims

1. Ultrasonic sensor (10) for an ultrasonic measuring device (1), comprising:
a transducer arrangement (11) for generating and detecting ultrasonic signals with at least one piezoelectric element (11.1), wherein the at least one piezoelectric element is configured via electrodes (11.3) to convert between electrical signals and ultrasonic signals and vice versa;
a coupling body (12) for transmitting the ultrasonic signals between a first side surface (12.1) and a second side surface (12.2) of the coupling body, wherein at least one piezoelectric element is arranged on the first side surface,
wherein the transducer arrangement has an arrangement amplitude response,
wherein the arrangement amplitude response is composed of at least two partially overlapping partial amplitude responses (30), each of the partial amplitude responses having a bandwidth (31), measured by a half-power width, and a center frequency (32),
wherein different partial amplitude responses, adjacent with respect to their frequency ranges, have a maximum spacing between their center frequencies (32) of a mean value of their bandwidths multiplied by a factor F,
wherein F is at most 2, and in particular at most 1.5, and preferably at most 1,
and wherein F is at least 0.2, and in particular at least 0.4, and preferably at least 0.5,
wherein the transducer arrangement (11) comprises at least two piezoelectric elements (11.1), and wherein at least two of the at least two piezoelectric elements respectively have a different piezo amplitude response,
wherein piezoelectric elements (11.1) with different piezo amplitude responses are arranged coaxially with respect to each other,
**characterized in that** a first piezoelectric element (11.11) of the piezoelectric elements with different amplitude responses is disk-shaped or ring-shaped, and that at least one second piezoelectric element (11.12) of the piezoelectric elements with different amplitude responses is formed as a ring, the at least one second piezoelectric element comprising an annular region (11.121) and a free central region (11.122),
wherein the first piezoelectric element is arranged in the central region of the at least one second piezoelectric element,
or wherein the second piezoelectric element is mounted on the first piezoelectric element, the first piezoelectric element being arranged on the first side surface of the coupling body.

2. Ultrasonic sensor according to claim 1,
wherein piezoelectric elements (11.1) with different piezo amplitude responses have different thicknesses.

3. Ultrasonic sensor according to claim 1 or 2,
wherein at least one piezoelectric element (11.1) has a piezo amplitude response composed of at least two partially overlapping partial amplitude responses (30), each of the partial amplitude responses having a bandwidth (31), measured by a half-power width, and a center frequency (32),
wherein different adjacent frequency ranges have, with respect to their center frequencies (32), a maximum spacing of a mean value of their bandwidths multiplied by a factor F,
wherein F is at most 2, and in particular at most 1,
wherein the piezoelectric element is disk-shaped and has a first thickness in one section and a second thickness in another section,
wherein a side surface (11.101) of the piezoelectric element is planar and acoustically coupled to the first side surface of the coupling body.

4. Ultrasonic sensor according to claim 3,
wherein the piezoelectric element (11.1) has a recess in a central region (11.102).

5. Ultrasonic measuring device (1) for measuring at least one measurement variable, comprising:
at least one ultrasonic sensor (10) according to any of the preceding claims,
an electronic measurement/operating circuit (20) for operating the at least one ultrasonic sensor and for providing measurement values of the at least one measurement variable.

## Revendications

1. Capteur à ultrasons (10) pour un dispositif de mesure à ultrasons (1), comprenant :
un agencement de transducteurs (11) destiné à générer et à détecter des signaux ultrasoniques, comprenant au moins un élément piézoélectrique (11.1), dans lequel ledit au moins un élément piézoélectrique est configuré, via des électrodes (11.3), pour convertir des signaux électriques en signaux ultrasoniques et vice versa ; un corps de couplage (12) destiné à transmettre les signaux ultrasonores entre une première surface latérale (12.1) et une deuxième surface latérale (12.2) du corps de couplage, dans lequel au moins un élément piézoélectrique est disposé sur la première surface latérale,
dans lequel le dispositif transducteur présente une réponse en amplitude d'ensemble,
dans lequel la réponse en amplitude de l'agencement est composée d'au moins deux réponses en amplitude partielles (30) se chevauchant partiellement, chacune des réponses en amplitude partielles ayant une largeur de bande (31), mesurée par une largeur à demi-puissance, et une fréquence centrale (32),
dans lequel différentes réponses d'amplitude partielles, adjacentes par rapport à leurs gammes de fréquences, présentent un écart maximal entre leurs fréquences centrales (32) égal à la valeur moyenne de leurs largeurs de bande multipliée par un facteur F,
où F est au plus égal à 2, et en particulier au plus égal à 1,5, et de préférence au plus égal à 1,
et dans lequel F est au moins égal à 0,2, et en particulier au moins égal à 0,4, et de préférence au moins égal à 0,5,
dans lequel le dispositif transducteur (11) comprend au moins deux éléments piézoélectriques (11.1), et dans lequel au moins deux desdits au moins deux éléments piézoélectriques présentent respectivement une réponse d'amplitude piézoélectrique différente,
dans lequel les éléments piézoélectriques (11.1) présentant des réponses d'amplitude piézoélectriques différentes sont disposés coaxialement les uns par rapport aux autres,
**caractérisé en ce qu'**un premier élément piézoélectrique (11.11) parmi les éléments piézoélectriques présentant des réponses d'amplitude différentes est en forme de disque ou d'anneau, et **en ce qu'**au moins un deuxième élément piézoélectrique (11.12) parmi les éléments piézoélectriques présentant des réponses d'amplitude différentes est formé en anneau, ledit au moins un deuxième élément piézoélectrique comprenant une région annulaire (11.121) et une région centrale libre (11.122),
dans lequel le premier élément piézoélectrique est disposé dans la région centrale dudit au moins un deuxième élément piézoélectrique,
ou dans lequel le deuxième élément piézoélectrique est monté sur le premier élément piézoélectrique, le premier élément piézoélectrique étant disposé sur la première surface latérale du corps d'accouplement.

2. Capteur à ultrasons selon la revendication 1,
dans lequel les éléments piézoélectriques (11.1) présentant des réponses d'amplitude piézoélectrique différentes ont des épaisseurs différentes.

3. Capteur à ultrasons selon la revendication 1 ou 2,
dans lequel au moins un élément piézoélectrique (11.1) présente une réponse d'amplitude piézoélectrique composée d'au moins deux réponses d'amplitude partielles (30) se chevauchant partiellement, chacune des réponses d'amplitude partielles ayant une largeur de bande (31), mesurée par une largeur à mi-puissance, et une fréquence centrale (32),
dans lequel différentes gammes de fréquences adjacentes présentent, par rapport à leurs fréquences centrales (32), un écart maximal égal à la valeur moyenne de leurs largeurs de bande multipliée par un facteur F,
où F est au plus égal à 2, et en particulier au plus égal à 1,
dans lequel l'élément piézoélectrique est en forme de disque et présente une première épaisseur dans une section et une
deuxième épaisseur dans une autre section,
dans lequel une surface latérale (11.101) de l'élément piézoélectrique est plane et couplée acoustiquement à la première surface latérale du corps de couplage.

4. Capteur à ultrasons selon la revendication 3,
dans lequel l'élément piézoélectrique (11.1) présente un évidement dans une région centrale (11.102).

5. Dispositif de mesure à ultrasons (1) destiné à mesurer au moins une grandeur de mesure,
comprenant :
au moins un capteur à ultrasons (10) selon l'une quelconque des revendications précédentes,
un circuit électronique de mesure/commande (20) destiné à commander le ou les capteurs à ultrasons et à fournir des valeurs de mesure de la ou des variables de mesure.
